Europäisches Patentamt

European Patent Office

Office européen des brevets

(11) Veröffentlichungsnummer : **0 052 703**
**B1**

(12) **EUROPÄISCHE PATENTSCHRIFT**

(45) Veröffentlichungstag der Patentschrift :
09.01.85

(51) Int. Cl.⁴ : **F 16 K   3/02**, F 16 K 31/122

(21) Anmeldenummer : **81107110.9**

(22) Anmeldetag : **10.09.81**

(54) **Plattenschieber.**

(30) Priorität : **26.11.80 CH 8745/80**

(43) Veröffentlichungstag der Anmeldung :
**02.06.82 Patentblatt 82/22**

(45) Bekanntmachung des Hinweises auf die Patenterteilung : **09.01.85 Patentblatt 85/02**

(84) Benannte Vertragsstaaten :
**DE FR GB IT SE**

(56) Entgegenhaltungen :
**DE-A- 2 152 748**
**FR-A- 2 277 285**
**US-A- 2 251 441**
**US-A- 2 478 832**
**US-A- 2 936 996**
**US-A- 3 610 569**
**US-A- 4 010 928**

(73) Patentinhaber : **GEBRÜDER SULZER AKTIENGE-SELLSCHAFT**
**Zürcherstrasse 9**
**CH-8401 Winterthur (CH)**

(72) Erfinder : **Tiefenthaler, Edelbert**
**Schützenhausstrasse**
**CH - 8353 Elgg (CH)**

(74) Vertreter : **Dipl.-Ing. H. Marsch Dipl.-Ing. K. Sparing Dipl.-Phys.Dr. W.H. Röhl Patentanwälte**
**Rethelstrasse 123**
**D-4000 Düsseldorf (DE)**

EP 0 052 703 B1

## Beschreibung

Die Erfindung betrifft einen Plattenschieber nach dem Oberbegriff des Anspruchs 1.

Aus der FR-A-22 77 285 ist ein solcher Plattenschieber bekannt, bei dem die einander abgewandten Räume der beiden Zylinder je über einen Dreiwegschieber wechselweise mit dem Eintrittstutzen oder mit einer Stelle verbindbar sind, die tieferen Druck als das Medium im Austrittstutzen aufweist. Solche Plattenschieber haben den Nachteil, dass die Steuerorgane, insbesondere wenn sie redundant ausgebildet werden müssen, kompliziert und kostspielig werden.

Es ist Aufgabe der Erfindung, den bekannten Plattenschieber so zu verbessern, dass dieser Nachteil behoben ist.

Diese Aufgabe wird durch die Merkmale des Kennzeichens des Anspruchs 1 gelöst.

Ein zusätzlicher Vorteil des erfindungsgemässen Plattenschiebers besteht darin, dass er bei beiden Strömungsrichtungen des Mediums, d. h. auch für den Fall eines Zurückströmens des Mediums betätigt werden kann. Schliesslich weist der erfindungsgemässe Plattenschieber den weiteren Vorteil auf, dass seine Steuerorgane sich so schalten lassen, dass er, wenn der bewegliche Schieber sich im Ruhe-Zustand befindet, keine Leckage aufweist, und zwar auch bei nicht völlig dichten Kolben. Dies wird dadurch erreicht, dass die beiden Auf/Zu-Ventile jeweils nur während der Dauer einer Verschiebung des beweglichen Schiebers geöffnet werden.

Durch die Merkmale nach dem Anspruch 2 kann der Mediumkonsum während eines Verschiebens des beweglichen Schiebers verringert werden, indem das dabei geöffnete Auf/Zu-Ventil mittels einer einfachen Verzögerungsschaltung geschlossen wird. Zusätzliche Steuermittel, die unmittelbar nach dem Anschlagen des sich verschiebenden Systems das geöffnete Auf/Zu-Ventil schliessen würden, sind nicht nötig.

Durch das Anbringen einer Schnäpper-Vorrichtung nach Anspruch 3 lässt sich der Plattenschieber in beliebiger räumlicher Lage einbauen.

Die Erfindung wird nun an zwei in der Zeichnung dargestellten Ausführungsbeispielen näher erläutert.

Es zeigen :

Figur 1 einen Axialschnitt durch einen ersten Plattenschieber,

Figur 2 einen Schnitt senkrecht zur Zeichenebene von Figur 1, entsprechend der Schnittlinie II-II und

Figur 3 einen Axialschnitt, entsprechend Figur 1, durch einen abgeänderten Schieber.

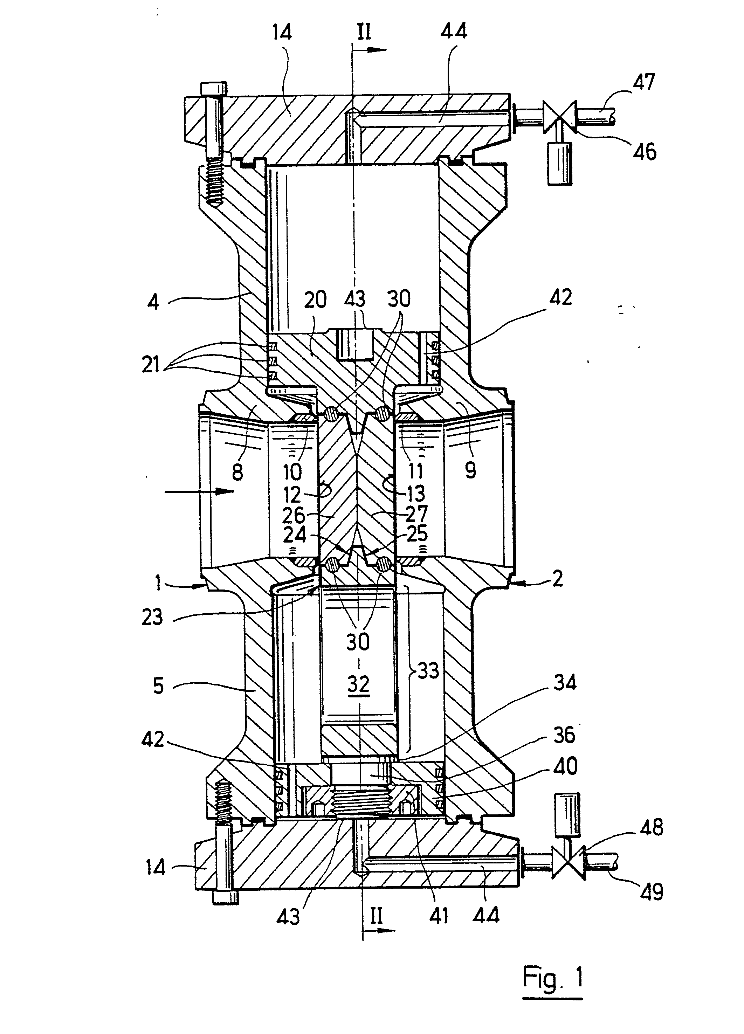

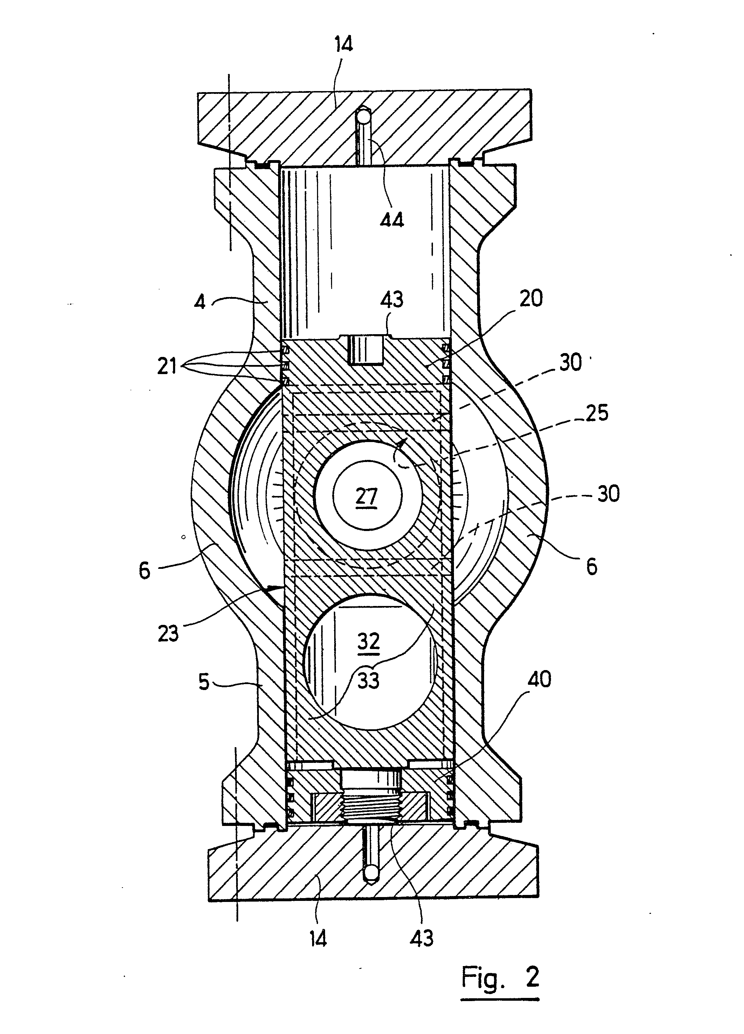

Im Ausführungsbeispiel nach Fig. 1 und 2 bilden ein Eintrittstutzen 1, ein Austrittstutzen 2, ein oberer Zylinder 4 und ein unterer Zylinder 5 und zwei Kugelschalenteile 6 ein Schiebergehäuse. Die Stutzen 1 und 2 stehen mit Partien 8 beziehungsweise 9 ins Gehäuseinnere vor. Es sind dort Sitzringe 10 beziehungsweise 11 eingeschweisst, deren freie Stirnseiten Dichtflächen 12 beziehungsweise 13 bilden.

Die Zylinder 4 und 5 sind durch je einen flachen Deckel 14 verschlossen.

Im oberen Zylinder 4 sitzt ein mit drei Kolbenringen 21 versehener Kolben 20, mit dem ein Schieber 23 fest verbunden ist. Dieser Schieber weist zwei Ausnahmen 24 und 25 für zwei Verschlußplatten 26 und 27 auf. Diese Platten haben in der gezeichneten Stellung ein geringes Spiel in Achsrichtung der Stutzen 1 und 2.

Die Verschlußplatten sind durch je zwei tangential verlaufende Bolzen 30 lose in den Ausnahmen 24 und 25 gehalten.

Unterhalb der Ausnahmen 24 und 25 weist der Schieber 23 eine Bohrung 32 auf. Das diese Bohrung umgebende Material des Schiebers bildet eine Brille 33. Im Anschluss an die Brille 33 weist der Schieber 23 eine Andrehung 34 und einen Gewindebolzen 36 auf. Auf diesem Gewindebolzen 36 sitzt ein Kolben 40, der mit einer versenkten Mutter 41 mit dem Schieber fest verbunden ist.

Die beiden Kolben 20 und 40 weisen je eine die beiden Kolbenseiten miteinander verbindende Drosselbohrung 42 auf. An den Stirnseiten des Kolbens 20 und des Gewindebolzens 36 sind mit Dichtflächen an den Deckeln 14 zusammenwirkende Rücksitze 43 vorgesehen.

In den beiden Deckeln 14 ist je eine im Winkel verlaufende Verbindungsbohrung 44 vorgesehen, die ausserhalb des Deckels über je ein Magnetventil 46 und 48 und eine Verbindungsleitung 47 beziehungsweise 49 mit einem nicht gezeichneten Raum tieferen Druckes verbunden ist.

Der Plattenschieber ist in den Figuren 1 und 2 in geschlossener Stellung dargestellt. Steht in Figur 1 im Stutzen 1 der höhere Druck an als im Stutzen 2, so wird durch die Druckdifferenz die Platte 27 an die Dichtfläche 13 gepresst. Die linke Platte 26 weist dabei gegenüber der Dichtfläche 12 Spiel auf. Demzufolge herrscht, bei geschlossenen Magnetventilen 46 und 48, beidseits der Kolben 20 und 40 derselbe Druck wie im Eintrittsstutzen 1.

Soll aus dieser Stellung der Plattenschieber geöffnet werden, so wird das Magnetventil 46 geöffnet. Aus dem Raum oberhalb des Kolbens 20 strömt Druckmedium in den nicht gezeichneten Raum tieferen Druckes ab und da über die Drosselbohrung 42, die kleineren Querschnitt hat als die Verbindungsleitung 44, nicht gleichviel Druckmedium nachströmt, steigt der bewegliche Schieber 23 an seinen oberen Anschlag, wobei die Brille 33 die Stutzen 1 und 2 mit seitlichem Spiel verbindet. Die Brille erlaubt dabei nicht nur den Durchfluss sondern sie verhilft zu einem glatten Strömungsverlauf zwischen den beiden Stutzen und damit zu einem geringen Druckabfall.

Soll der Plattenschieber geschlossen werden, so wird das Magnetventil 46 geschlossen und das Magnetventil 48 geöffnet. Dadurch baut sich oberhalb des Kolbens 20 wiederum ein Druck auf, während der Raum unterhalb des Kolbens 40 entlastet wird. Dadurch fährt der Schieber in die gezeichnete Stellung zurück. Ist diese erreicht, so kann das Ventil 48 geschlossen werden. Die Schwerkraft wie auch die zwischen der Verschlußplatte 27 und der Dichtfläche 13 wirkenden Reibungskräfte verhindern, dass der Schieber sich ungewollt öffnet.

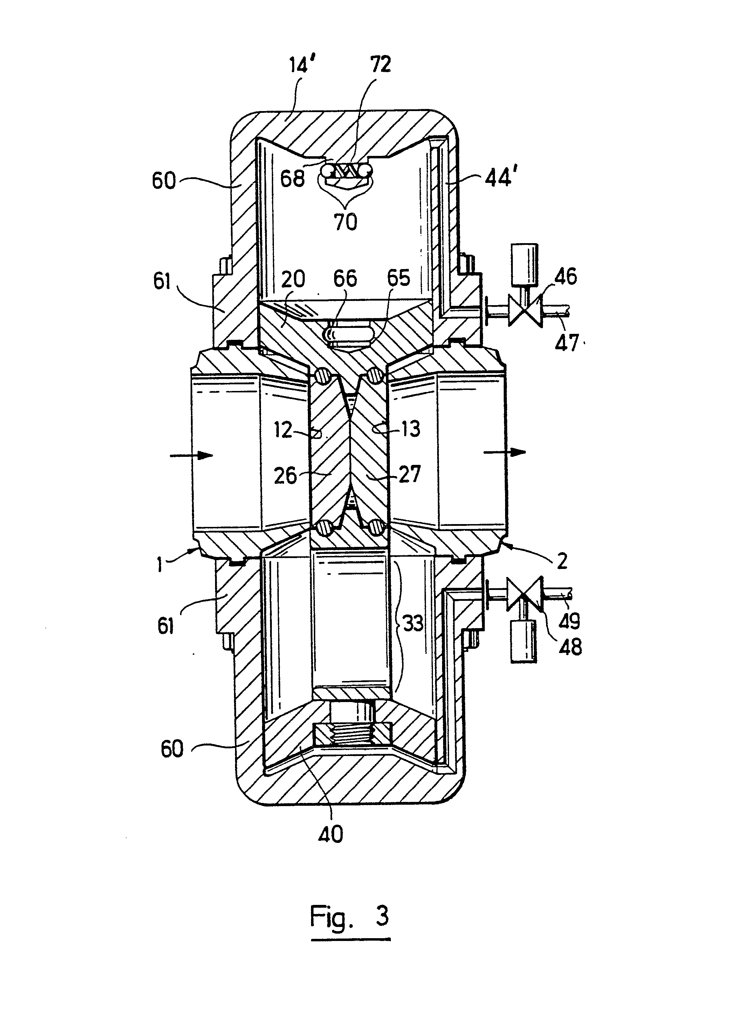

Im Ausführungsbeispiel nach Figur 3 sind gleiche Teile mit gleichen Ziffern bezeichnet wie in den Figuren 1 und 2. Wesentliche Unterschiede gegenüber dem ersten Ausführungsbeispiel liegen darin, dass die Zylinder 4 und 5 nicht ein Stuck mit dem Schiebergehäuse bilden, sondern von diesen trennbar sind, und dass die Deckel 14 mit den Zylindern 4 und 5 zu Zylinderköpfen 60 zusammengebaut sind. Diese Zylinderköpfe 60 weisen Flansche 61 auf, die in Richtung der Zylinderachse gesehen im wesentlichen quadratischen Umriss aufweisen. In den vier etwa dreieckigen Zwickeln dieser Flansche 61 sind nicht gezeichnete, achsparallele Bohrungen vorgesehen. Durch diese Bohrungen sind vier nicht gezeichnete, an den Eintritts- und Austrittsstutzen 1 beziehungsweise 2 vorbeilaufende Zugankerschrauben hindurchgeführt, mittels denen die beiden Zylinderköpfe 60 auf Stirnflächen des aus dem Eintrittsstutzen 1, dem Austrittsstutzen 2 und den beiden Schalen 6 bestehenden Schiebergehäuses festgespannt sind.

In diesem zweiten Ausführungsbeispiel sind die Platten 26 und 27 mit leichtem Anzug gegen einander angeordnet. Die Spiele der Platten in den Ausnahmen 24 und 25 beziehungsweise an den Bolzen 30 sind zusammen mit dem Anzug der Platten 26 und 27 derart gewählt, dass die Platten beim Schliessen des Schiebers an den Dichtflächen 12, 13 nicht hängenbleiben können, auch wenn sie nicht angeschrägt sind.

Im Kolben 20 ist zentral eine Bohrung 65 mit einer etwa halbkreisförmigen Ringnut 66 vorgesehen. An der Stirnwand 14′ ist, ebenfalls zentral, ein vorstehender Bolzen 68 angeordnet, der eine Querbohrung aufweist, in der zwei Kugeln 70 sitzen. Diese Kugeln 70 werden durch eine Feder 72 auseinander gedrückt; sie können jedoch wegen beidseitiger Einbördelungen an der Querbohrung diese nicht verlassen.

Die Ringnut 66 bildet zusammen mit dem Bolzen 68 und den darin federnd gelagerten Kugeln 70 eine Schnäppereinrichtung, welche so bemessen ist, dass sie den Schieber mit dem Kolben in der oberen Endlage zu tragen vermag. Dadurch wird es möglich, in offener Ventilstellung das magnetventil 46 wiederum zu schliessen, ohne dass der Schieber unter der Wirkung der Schwerkraft sich senkt. Dadurch wird ein dauernder Mediumabfluss vermieden.

Die Magnetventile 46 und 48 sind in diesem zweiten Ausführungsbeispiel am Flansch 61 befestigt, was zu einer entsprechenden Führung der Verbindungsbohrung 44′ zwingt. Die Magnetventile sind damit in besser geschützter Lage als im Ausführungsbeispiel nach den Figuren 1 und 2. Es ist jedoch jederzeit möglich, die Magnetventile oder mindestens die wesentlichen Teile davon, gegebenenfalls ohne die Magnetspulen, innerhalb des Deckels 14 bei Fig. 1 oder innerhalb des Zylinderkopfes bei Fig. 3 anzuordnen.

Falls der Plattenschieber derart angeordnet wird, dass die Zylinderachsen horizontal verlaufen, kann es zweckmässig sein, an den Enden beider Zylinder Schnäpperanordnungen 65 bis 72 vorzusehen, sodass ein ungewolltes Schliessen des Schiebers infolge Erschütterungen sicher vermieden wird.

Der erfindungsgemässe Plattenschieber lässt sich auf verschiedene Weise modifizieren. So lassen sich eine oder mehrere auf den einen oder anderen der Kolben wirkende Federn, beispielsweise zum Ausgleichen der Schwerkraft oder zum zuverlässigen Erreichen einer Sicherheitsstellung vorsehen. Statt der Drosselbohrung 42 kann auch ein passendes Kolbenspiel angeordnet werden, wobei auf Kolbenringe verzichtet werden kann. Ist das Kolbenspiel genügend gross, so kann der Körper des Schiebers 23, an dem die Ausnahmen 24 und 25 weggelassen sind, die Funktion der Dichtplatten 26 und 27 selbst erfüllen.

Es ist zu bemerken, dass bei der gezeichneten Konstruktion die Flächen der Kolben 20 und 40 stark überdimensioniert sind, da die bei einer Bewegung des Schiebers zu überwindenden Reibungskräfte nur einen Bruchteil des Plattenanpressdruckes ausmachen, während die verfügbare Antriebskraft ein Mehrfaches der Plattenanpresskraft betragen kann, da der Kolbendurchmesser in der Regel erheblich grösser ist als der Durchmesser des Schiebersitzes.

Zum Erhöhen der Funktionssicherheit des Schiebers lassen sich, wie an sich bekannt, die Magnetventile 46 und 48 redundant vermehren. Überdies können, zum Beispiel zum Betätigen des Schiebers in drucklosem Zustand, an den Deckeln 14 und Zylinderköpfen 60 Anschlüsse für ein unter Druck stehendes Fremdmedium, zum Beispiel für Stickstoff, vorgesehen werden.

Statt zu einem Raume niedrigeren Druckes lassen sich die Leitungen 47 und 49 auch zu einem solchen höheren Druckes führen. Aus Redundanzgründen können auch gleichzeitig Anschlüsse verschiedener Art angeordnet sein.

Schliesslich lässt sich der Schieber auch dreistufig ausführen, in dem Sinne, dass er neben Dichtplatten 26, 27 und einer Brille 33 noch eine Durchgangspartie aufweist, die gegenüber der Brille einen geringeren Durchlassquerschnitt aufweist. Ein passend angeordneter Schnäpper kann den Schieber jeweils in der mittleren der drei Stellungen festhalten, wobei beispielsweise eine auf die Magnetventile einwirkende, von einem Hubgeber beeinflusste, logische Schaltung das Ansteuern dieser Mittelstellung besorgt.

**Ansprüche**

1. Plattenschieber mit einem einen Eintrittstutzen (1) und einen Austrittstutzen (2) aufweisenden Gehäuse, in dem ein zwischen benachbarten Dichtflächen (12, 13) der beiden Stutzen (1, 2) und hinsichtlich dieser Stutzen etwa radial beweglicher Schieber (23) mit mindestens einer Verschlussplatte (26, 27) und einer Brille (33) angeordnet ist, wobei der bewegliche Schieber (23) mit zwei Servokolben (20, 40) starr verbunden ist, zu denen je ein Zylinder (4, 5 ; 60) gehört, wobei die beiden Zylinder (4, 5 ; 60) einander diametral gegenüberliegen und Teile des Gehäuses bilden, wobei die beiden einander zugewandten Räume der Zylinder (4, 5 ; 60) bei offener Stellung des beweglichen Schiebers (23) über ein Spiel auf der Zuströmseite zwischen der Verschlussplatte (26) und der Dichtfläche (12) miteinander und mit dem Innenraum des Eintrittstutzens (1) kommunizieren und die beiden einander abgewandten Räume der Zylinder (4, 5 ; 60) über Steuerorgane (46, 48) mit einer Stelle verbindbar sind, die tieferen Druck aufweist als das Medium im Eintrittstutzen (1), und wobei Mittel (42) vorhanden sind, die die beiden einander abgewandten Räume der Zylinder (4, 5 ; 60) mit Medium aus dem Eintrittstutzen (1) versorgen, dadurch gekennzeichnet, dass diese Mittel durch feste Drosselöffnungen (42) gebildet sind, die jeweils beide Seiten der Servokolben (4, 5 ; 60) miteinander verbinden, dass jedem Zylinder (4, 5 ; 60) ein Auf/Zu-Ventil (46, 48) als Steuerorgan zugeordnet ist und dass die beiden einander zugewandten Räume der Zylinder (4, 5 ; 60) auch bei geschlossener Stellung des beweglichen Schiebers (23) über ein Spiel auf der Zuströmseite zwischen der Verschlussplatte (26) und der Dichtfläche (12) miteinander und mit dem Innenraum des Eintrittstutzens (1) kommunizieren, während auf der Abströmseite die Verschlussplatte (27) dichtend an der Dichtfläche (13) anliegt.

2. Plattenschieber nach Anspruch 1, dadurch gekennzeichnet, dass die die einander abgewandten Zylinderräume mit den Steuerorganen (46, 48) verbindenden Kanäle (44) je an ihrer Einmündung in den betreffenden Zylinderraum von einer Dichtfläche umgeben sind und die Servokolben (20, 40) mit je einem Rücksitz (43) versehen sind, der in der Endstellung des Servokolbens (20, 40) mit der zugehörigen Dichtfläche zusammenwirkt.

3. Plattenschieber nach Anspruch 1 oder 2, dadurch gekennzeichnet, dass mindestens einer der beiden Servokolben (20, 40) mit zugehörigem Zylinder (60) eine Schnäpper-Vorrichtung (66, 70) zum Festhalten des aus Servokolben (20, 40) und beweglichem Schieber (23) bestehenden Systems in einer Hubendlage aufweist.

**Claims**

1. A gate valve having a body having an inlet port (1) and an outlet port (2), a gate (23) which has at least one disk (26, 27) and an apertured yoke (33) being provided in the body between adjacent sealing surfaces (10, 11) of the two ports (1, 2) and being movable substantially radially thereof, the gate (23) being rigidly connected to two servo pistons (20, 40) each associated with a cylinder (4, 5 ; 60), the two cylinders (4, 5 ; 60) being disposed diametrically opposite one another and forming parts of the body, those chambers of the cylinders (4, 5 ; 60) which are near one another communicating, by way of a clearance on the inlet side between the disk (26) and the sealing surface (10), with one another and with the interior of the inlet port (1) when the gate (23) is in its open position, those two chambers of the cylinders (4, 5 ; 60) which are remote from one another being adapted to communicate by way of control elements (46, 48) with a place which is at a lower pressure than the medium in the inlet port (1), means (42) being provided for supplying medium from the inlet port (1) to those two chambers of the cylinders (4, 5 ; 60) which are remote from one another, characterised in that the latter means take the form of fixed restrictor orifices (42) which interconnect both faces of the servo pistons (4, 5 ; 60) ; an on-off valve (46, 48) is associated as control element with each cylinder (4, 5 ; 60) ; and even when the gate (23) is in the closed position, those two chambers of the cylinders (4, 5 ; 60) which are near one another communicate, by way of a clearance on the inflow side between the disk (26) and the sealing surface (10), with one another and with the inlet port interior, while on the outflow side the disk (27) engages sealingly with the sealing surface (11).

2. A gate valve according to claim 1, characterised in that the ducts (44) which connect the remote cylinder chambers to the control elements (46, 48) have a sealing surface extending around each of their orifices opening into the particular cylinder chamber concerned ; and each piston (20, 40) has a pilot seat (43) which, with the piston (20, 40) in its end position, co-operates with the associated sealing surface.

3. A gate valve according to claim 1 or 2, characterised in that at least one of the two pistons (20, 40) and the associated cylinder (60) has a snapaction device (66, 70) to retain in one end-of-stroke position the system comprising the servo piston (20, 40) and the movable gate (23).

**Revendications**

1. Valve à sièges parallèles comportant un corps qui présente un raccord d'entrée (1) et un raccord de sortie (2) et dans lequel se trouve un tiroir (23) intercalé entre des surfaces d'étanchéité voisines (10, 11) des deux raccords (1, 2), mobile sensiblement radialement par rapport à ces raccords et muni d'au moins une plaque d'obturation (26, 27) et d'une lunette (33), le tiroir mobile (23) étant relié rigidement à deux pistons pilotes (20, 40) à chacun desquels est associé un cylindre (4, 5 ; 60), les deux cylindres (4, 5 ; 60) étant diamétralement opposés et formant des parties dudit corps, les deux chambres des cylindres (4, 5 ; 60) tournées l'une vers l'autre communiquant l'une avec l'autre et avec l'espace interne du raccord d'entrée (1) lorsque le tiroir mobile (23) est en position ouverte, par l'intermédiaire d'un jeu réservé du côté admission entre la plaque d'obturation (26) et la surface d'étanchéité (10), et les deux chambres desdits cylindres (4, 5 ; 60) tournées à l'écart l'une de l'autre pouvant être reliées, par l'intermédiaire d'organes de commande (46, 48), à une zone accusant une pression plus basse que celle du fluide dans le raccord d'entrée (1), des moyens (42) étant prévus pour alimenter, en fluide provenant du raccord d'entrée (1), les deux chambres des cylindres (4, 5 ; 60) à l'écart l'une de l'autre, caractérisée par le fait que ces moyens sont formés par des étranglements fixes (42) qui raccordent à chaque fois les deux faces des pistons pilotes (4, 5 ; 60) ; par le fait qu'une vanne (46, 48) du type ouvert/fermé est associée en tant qu'organe de commande à chaque cylindre (4, 5 ; 60) ; et par le fait que les deux chambres des cylindres (4, 5 ; 60) tournées l'une vers l'autre communiquent l'une avec l'autre et avec l'espace interne du raccord d'entrée (1) également dans la position fermée du tiroir mobile (23), par l'intermédiaire d'un jeu réservé du côté admission entre la plaque d'obturation (26) et la surface d'étanchéité (10), tandis que, du côté évacuation, la plaque d'obturation (27) est appliquée hermétiquement contre la surface d'étanchéité (11).

2. Valve à sièges parallèles selon la revendication 1, caractérisée par le fait que les canaux (44), reliant aux organes de commande (46, 48) les chambres cylindriques tournées à l'écart l'une de l'autre, sont entourés chacun par une surface d'étanchéité à leur embouchure dans la chambre cylindrique considérée, et les pistons (20, 40) sont munis chacun d'un siège postérieur (43) qui coopère avec la surface d'étanchéité associée lorsque le piston (20, 40) occupe sa position extrême.

3. Valve à sièges parallèles selon la revendication 1 ou 2, caractérisée par le fait qu'au moins l'un des deux pistons (20, 40) et son cylindre associé (60) présentent un mécanisme (66, 70) d'emboîtement par déclic pour maintenir fermement, dans une position de fin de course, le système comprenant les pistons pilotes (20, 40) et le tiroir mobile (23).

Fig. 1

Fig. 2

Fig. 3